# FASCICULE DE BREVET EUROPEEN

(11) **EP 0 704 489 B1**
(45) Date de publication et mention de la délivrance du brevet: **13.12.2000**
(21) Numéro de dépôt: 95402017.8
(22) Date de dépôt: 06.09.1995
(51) Int. Cl.: C08L 77/00, C08L 77/02, C08L 77/06, H01B 3/30, C08G 81/02

(54) **Câbles électriques ayant un revêtement ignifugé à base de polyamide**
Elektrische Kabel mit flammhemmender Beschichtung auf Basis von Polyamiden
Electrical cables with flame resistant polyamide coating

(30) Priorité: 28.09.1994 FR 9411584
(43) Date de publication de la demande: 03.04.1996
(73) Titulaire: Atofina, 92800 Puteaux (FR)
(72) Inventeur: Breant, Patrice, F-27470 Serquigny (FR)

(56) Documents cités:
- EP-A- 0 272 695
- EP-A- 0 364 897
- EP-A- 0 375 389
- EP-A- 0 382 539
- EP-A- 0 488 119
- EP-A- 0 564 338

## Description

La présente invention concerne des cables electriques revetus de compositions thermoplastiques ignifugées à base de polyamide.

La présente invention concerne des cables revetus de compositions thermoplastiques souples ayant de bonnes propriétés mécaniques, une tenue au feu et aux solvants améliorée et éventuellement une excellente tenue dimensionnelle à chaud. Plus particulièrement, ces compositions sont à base d'une matrice polyamide, d'une phase dispersée polyéthylénique et d'agents ignifugeants répartis entre les deux phases.

L'invention a également pour objet le procédé d'obtention des dits câbles électriques.

Des compositions ignifugeantes à base de polymères éthyléniques et charges minérales sont connues et utilisées comme revêtements de câbles électriques. En particulier, les brevets EP 326 775 et EP 406 035 décrivent des compositions contenant des charges minérales telles que l'hydroxyde de magnésium ou l'hydroxyde d'aluminium et des polymères éthyléniques réticulés. Ces compositions ne contiennent pas de polyamide. Pour certains câbles électriques, il est nécessaire que les propriétés mécaniques et la résistance aux solvants soient supérieures à celles des compositions à base de polyéthylène.

La demanderesse a maintenant trouvé des câbles électriques ayant un revêtement comprenant au moins une couche d'une composition thermoplastique comprenant :
- une matrice (A) en polyamide
- une phase dispersée (B) à base de polyoléfine au moins partiellement réticulée provenant de la réaction chimique d'une molécule ou d'un polymère éthylénique (B1) porteur d'une ou de plusieurs fonctions dérivant d'acides pouvant être mono ou dicarboxyliques ou de polyamines et d'une molécule ou d'un polymère éthylénique (B2) porteur d'une ou de plusieurs fonctions de type époxydique
- des agents ignifugeants (C) répartis entre ces deux phases
- le rapport de la teneur du polyamide (A) à celle de la phase dispersée (B) est compris entre 0,25 et 3 en poids,
le module de flexion de la composition étant inférieur à 1000 Mpa (ISO 178).

Les compositions de revêtement de ces câbles sont des compositions thermoplastiques telles que la variation de la résistance à la rupture et la variation de l'allongement à la rupture après un séjour de 24 heures dans l'huile ASTM No 2 à 100° C soient inférieures à 25 %.

Un procédé pour préparer les compositions de l'invention consiste à introduire dans une extrudeuse le polyamide (A), les composants de la phase (B) ayant été auparavant prémélangés et au moins une partie des agents ignifugeants (C), le reste de (C) étant introduit dans une zone ultérieure de l'extrudeuse.

Il est important que les agents ignifugeants soient introduits pendant la préparation du matériau pour pouvoir se répartir dans la matrice et les nodules de la phase dispersée sans en altérer les propriétés mécaniques.

Le brevet EP 564 338 décrit une composition thermoplastique multiphase à base de résine polyamide contenant un polymère d'éthylène à fonction époxyde. Ce brevet a pour unique objectif d'améliorer la résistance au choc à basse température. La composition peut contenir des charges pour la rigidifier. Il n'est rien écrit sur la répartition de l'ignifugeant évitant d'altérer les propriétés de la matrice polyamide. La demande JP 05093108 A publiée le 16 Avril 1993 décrit des compositions ignifugées pour câbles électriques à base de (i) polyéthylène ou copolymères de l'éthylène, (ii) de polyamide pour résister à l'usure, (iii) de copolymères fonctionnalisés pour compatibiliser le polyéthylène et le polyamide et enfin d'ignifugeants. Ces compositions essentiellement à base de polyéthylène n'ont ni les propriétés mécaniques de la présente invention, ni leur résistance à l'huile.

La demande européenne EP 258 040 décrit des alliages (i) de polyamide et (ii) d'un copolymère éthylène / acrylate d'alkyle / anhydride maléique éventuellement ionomérisés et contenant un agent capable de réticuler (i) ou (ii). De plus, il n'est rien écrit ni exemplifié sur l'incorporation des ignifugeants.

EP 532 122 décrit des compositions constituées de polyamide, de polypropylène fonctionnalisé et d'hydroxyde de magnésium ayant un bon aspect de surface après moulage. Ces compositions sont très chargées en hydroxyde de magnésium, le module de flexion varie de 5 800 à 8 400 MPa, ce qui caractérise un matériau trop rigide pour pouvoir par exemple isoler des câbles électriques. De plus, cette composition résiste mal aux huiles et aux acides.

EP 488119 décrit des compositions à base de polyamide et d'une phase dispersée telles que le rapport en poids polyamide / phase dispersée est d'au moins 6.

EP 382539 décrit des compositions à base de polyamide ayant un module de flexion de 1700 à 2010 MPa.

EP 364897 décrit des compositions à base de polyamide ayant un module de flexion d'au moins 2000 MPa.

La matrice polyamide (A) de la présente invention est constituée d'un polyamide ou d'une composition de polyamides. Par polyamide, on désigne présentement une résine produite par polycondensation d'un ou de plusieurs aminoacides tels que les acides aminocaproïque, amino-7 heptanoïque, amino-11 undécanoique ou de quantités équimolaires d'un acide dicarboxylique saturé contenant de 4 à 12 atomes de carbone avec une diamine, la diamine contenant de 4 à 12 atomes de carbone. On peut utiliser un excès de diamine de manière à obtenir un excès de groupes terminaux amines par rapport aux groupes terminaux carboxyle dans le polyamide.

A titre d'illustration de telles résines, on citera :
- le polyhexaméthylèneadipamide (polyamide-6,6),
- le polyhexaméthylèneazélaamide (polyamide-6,9),
- le polyhexaméthylènesébacamide (polyamide-6,10),
- le polyhexaméthylènedodécanédiamide (polyamide-6,12),
- le poly(undécanoamide)(polyamide-11).

Il est possible aussi d'utiliser dans la présente invention des polyamides préparés par polycondensation d'au moins deux des monomères et polymères mentionnés ci-dessus, ce qui conduit à des copolyamides.

Les résines polyamide de la présente invention peuvent également être produites par polymérisation d'un ou plusieurs lactames tels que le caprolactame qui conduit au polyamide 6 ou le lauryllactame qui conduit au polyamide-12.

Ces résines polyamide ont une masse moléculaire d'au moins 5000 et de préférence un point de fusion supérieur ou égal à 180°C.

Par polyamides, on désigne également les élastomères thermoplastiques à base de polyamide qui sont des copolymères blocs aussi appelés polyétheramides ou polyétheresteramides dont les séquences rigides sont constitués de polyamides et les séquences souples de polyéthers.

Par exemple, on peut condenser des blocs de polyamide 6 ou 12 à extrémités acide carboxylique et de masse Mn comprise entre 600 et 6 000 avec des blocs polyéthers à extrémités OH et de masse 500 à 3 000 du type polyéthylène glycol (PEG) ou polytétraméthylène glycol (PTMG). On obtient des polyétheresteramides.

Si les polyéthers précédents sont transformés pour avoir des extrémités amines, la condensation de ces polyétherdiamines avec les polyamides dicarboxyliques produit des polyétheramides ; c'est-à-dire que la matrice polyamide peut aussi être constituée d'un mélange d'au moins deux produits choisis parmi les polyamides, les polyétheramides et les polyétheresteramides.

Les polyamides peuvent contenir différents additifs de formulation tels que des antioxydants, des anti-UV ou des plastifiants comme le N-butyl benzène sulfonamide.

La phase dispersée (B) est le résultat de la réaction chimique d'une molécule ou d'un polymère éthylénique (B1) porteur d'une ou de plusieurs fonctions dérivant d'acides pouvant par exemple être mono ou dicarboxyliques ou de polyamines et d'une molécule ou d'un polymère éthylénique (B2) porteur d'une ou de plusieurs fonctions de type époxydique. Cette réaction peut être activée par l'emploi d'un additif approprié (B3) comportant de l'azote ou une fonction amine tertiaire.

Les polymères B1 peuvent dériver des copolymères de l'éthylène et d'un ester vinylique d'acide carboxylique saturé ou des copolymères de l'éthylène et d'un ester d'acide carboxylique insaturé.

Les fonctions dérivant d'acides carboxyliques ou de polyamines peuvent être apportées par copolymérisation ou greffage à l'état fondu ou en solution suivant les règles de l'art. Les fonctions dérivant d'acides carboxyliques sont par exemple les acides eux-mêmes, esters, sels ou anhydrides. On utilise par exemple l'anhydride itaconique ou l'anhydride maléique.

Les polymères B1 sont avantageusement des copolymères éthylène / acétate de vinyle (EVA) ou éthylène / (méth)acrylate d'alkyle copolymérisés ou greffés par de l'anhydride maléique.

Les polymères B2 peuvent dériver des copolymères de l'éthylène et d'un ester vinylique d'acide carboxylique saturé ou des copolymères de l'éthylène et d'un ester d'acide carboxylique insaturé.

Les fonctions de type époxydique peuvent être apportées par copolymérisation ou greffage à l'état fondu ou en solution suivant les règles de l'art.

Les fonctions époxydiques entrant dans la composition du polymère éthylénique (B2) peuvent être des esters ou des éthers de glycidyle aliphatiques. A titre d'illustration, on peut citer les (méth)acrylates de glycidyle, maléate de glycidyle, itaconate de glycidyle, vinylglycidyléther, allylglycidyléther ou le vinylcyclohexèneoxyde.

Les polymères B2 peuvent être par exemple des copolymères éthylène / acétate de vinyle (EVA) ou éthylène / (méth)acrylate d'alkyle copolymérisés ou greffés par du méthacrylate de glycidyle.

A titre d'illustration de phase dispersée polyéthylénique (B), on peut citer le produit de la réaction de dérivés polyacides ou polyanhydrides ou polyamines sur le terpolymère éthylène / (méth)acrylate d'alkyle / (méth)acrylate de glycidyle et le produit de la réaction d'un terpolymère éthylène / (méth)acrylate d'akyle / anhydride maléique sur un terpolymère éthylène / (méth)acrylate d'alkyle / (méth)acrylate de glycidyle catalysée par notamment le diméthylsuif amine ou la tétraméthylguamidine (B3).

Selon une troisième possibilité, la phase dispersée (B) peut également être le résultat de la même réaction de (B1) sur (B1) ou de (B2) sur (B2) en présence d'un agent réticulant.

La réticulation au moins partielle ou l'augmentation de viscosité des polymères devant constituer la phase dispersée, est nécessaire. Sans cette réticulation ou augmentation de viscosité, ou si elle n'est pas suffisante, lors de l'opération de mélangeage et de fabrication des compositions de l'invention, la phase dispersée est susceptible de se constituer de polyamide, ce qui est préjudiciable à la bonne tenue au solvant et à la bonne mise en oeuvre des compositions de l'invention.

Le rapport R1 de la teneur du polyamide (A) à celle de la phase dispersée (B) défini par (A)/(B) en poids peut être compris préférentiellement entre 0,67 et 1,5. Les valeurs, telles que définies, du rapport R1 permettent d'obtenir un matériau souple.

Le rapport R2 de la teneur du réactif (B1) à celle du réactif (B2) défini par (B1 )/(B2) est choisi suivant les quantités des fonctions réactives présentes dans (B1) et (B2) et préférentiellement par leur stoechiométrie.

Le rapport R3 de la teneur de l'activateur (B3) à la somme des teneurs des polymères réactifs défini comme (B3)/((B1)+(B2)) est compris entre 0 et 0,5 massique, préférentiellement entre 0 et 0,1 massique.

Les agents ignifugeants (C) sont généralement des charges minérales adaptées à la mise en oeuvre du matériau. On citera, par exemple, l'hydroxyde de magnésium, l'hydroxyde d'aluminium, les différents hydrotalcites, le carbonate de calcium. L'efficacité de ces additifs peut être renforcée par leur mélangeage.

L'efficacité de ces charges ignifugeantes peut être aussi améliorée par l'incorporation conjointe de produits comme le trioxyde d'antimoine ou l'hydroxystannate de zinc, le stannate de zinc ou le borate de zinc employés à des teneurs adaptées.

Pour ce type d'additifs, une tenue au feu convenable est généralement obtenue pour une teneur massique globale supérieure à 30 %.

Les additifs apportant la tenue au feu améliorée peuvent être également des systèmes dits intumescents comportant des polyols comme par exemple le pentaérythrytol et des produits portant des fonctions azotées ou phosphorées comme par exemple le polyphosphate d'ammonium ou le cyanurate de mélamine. L'efficacité de ces systèmes peut également être améliorée par l'emploi conjoint d'additifs comme l'oxyde d'antimoine ou différentes zéolithes.

Pour ce type d'additifs, une tenue au feu convenable est généralement obtenue pour une teneur massique globale supérieure à 25 %

La tenue au feu peut également, quand les circonstances d'utilisation du matériau final le permettent, être améliorée par l'emploi de dérivés halogénés comme le décabromodiphényloxyde ou le décabromodiphényle généralement en association avec des produits comme l'oxyde d'antimoine. Pour ce type d'additifs, une tenue au feu convenable est généralement obtenue pour une teneur massique globale supérieure à 10%.

Les produits (C) sont répartis dans toute la composition. La tenue au feu est évaluée par la mesure de l'indice d'oxygène (IOL) tel que défini dans la norme ASTM D2863-70 sur les éprouvettes utilisées pour le test de flexion (barreaux 80*10*4 mm³).

Un produit a une bonne tenue au feu si son IOL est supérieur à 28-30.

Les propriétés mécaniques sont évaluées par la mesure des propriétés dynamométriques telles que l'allongement à la rupture ( AR ) et la résistance à la rupture (RR) suivant la norme ISO R 527/1A sur des éprouvettes, ayant la forme d'haltères de dimensions 105*10*4 mm³, préconisées par la norme ISO en référence, soumises à une vitesse de traction de 50 mm/min..

La tenue dans l'huile ASTM No 2 est significative d'une bonne tenue aux solvants.

L'avantage des compositions de l'invention, outre les propriétés mécaniques et la tenue aux solvants, est qu'elles sont thermoplastiques ce qui facilite leur mise en oeuvre. Alors que certaines compositions de l'art doivent être réticulées pendant leur application sur le câble électrique à l'aide de peroxydes dangereux à manipuler et pouvant donner naissance à des produits odorants ou nuisibles aux qualités du revêtement. Les compositions de la présente invention sont préparées puis ultérieurement utilisées comme de simples thermoplastiques par exemple pour revêtir des câbles électriques.

On peut aussi incorporer dans les compositions de l'invention des pigments, des colorants, des stabilisants, des antioxydants ou des plastifiants.

Les compositions de l'invention présentent une bonne résistance à l'acide chlorhydrique et à la soude.

La tenue à ces produits est évaluée par la variation des propriétés dynamométriques ( AR et RR ) après 4 heures à 70°C dans les solutions 1N. Typiquement un matériau ayant une bonne tenue aux solvants présente des variations de propriétés inférieures à 25 %.

Les compositions de l'invention peuvent être de différentes souplesses.

La souplesse du matériau ( ou sa flexibilité ) est évaluée par la mesure du module en flexion d'éprouvettes ayant la forme de barreaux de dimensions 80∗10∗4 mm³ préconisées par la norme ISO 178.

Les compositons riches en polyamide sont peu souples. On peut ajuster la souplesse par la quantité et la nature de la phase (B).

Les compositions de l'invention peuvent avoir un module de flexion inférieur à 1 000 MPa ou même 500 MPa tout en gardant une bonne résistance aux solvants et au feu.

Avantageusement, les compositions ont un module de flexion entre 100 et 500 MPa, et de préférence compris entre 150 et 450.

Les compositions de l'invention présentent une bonne tenue dimensionnelle à chaud (fluage).

La tenue dimensionnelle à chaud est évaluée par l'allongement sous charge à chaud d'une éprouvette de type ISO R 527. La température typique d'essai est de 200°C et l'éprouvette est soumise à une contrainte initiale de 2 bars pendant 15 mn. La variation d'allongement mesurée rapportée à la longueur initiale de l'éprouvette définit une grandeur appelée aussi tenue au fluage. Typiquement, un matériau ayant une bonne tenue dimensionnelle à chaud, comme un polyéthylène réticulé, présente une tenue au fluage à 200°C, après 15 mn, inférieure à 100 %.

La tenue au fluage augmente avec le point de fusion du polyamide.

Les compositions de l'invention ont un fluage nettement inférieur, de l'ordre de 10 % au plus et plus souvent inférieur à 5 %.

La présente invention concerne aussi un procédé de préparation de ces compositions. Les constituants de la phase dispersée B sont auparavant mélangés dans des conditions telles qu'il n'y ait pas un début de réaction significatif, par exemple, par mélange à sec au tonneau.

Les compositions peuvent être obtenues par mélange direct des différents composants à l'état fondu des polymères, dans des conditions de température et de temps de séjour adaptées aux cinétiques des réactions mises en jeu, dans une extrudeuse classique.

Le mélange des composants de B et le polyamide sont généralement introduits en zone 1 de l'extrudeuse utilisée pour la fabrication du matériau avec l'ensemble ou une partie des additifs d'ignifugation ; dans ce dernier cas, le reste des additifs d'ignifugation est introduit par gavage dans une autre zone de l'extrudeuse.

Les extrudeuses habituellement utilisées peuvent être mono-vis ou bi-vis, co ou contrarotatives. Dans les exemples qui vont suivre les mélanges ont été réalisés soit sur KO MALAXEUR BUSS PR46/70 avec L/D = 15 soit sur WERNER 40 (bi-vis corotative) dans les conditions de températures suivantes :

| KO MALAXEUR BUSS | | | | | |
|---|---|---|---|---|---|
| **ZONES** | **1** | **2** | **3** | **4** | **5** |
| TEMPERATURES (°C) | | 210 à 230 | 240 à 270 | 220 à 240 | 210 à 230 |

| WERNER 40 | | | | | | | | |
|---|---|---|---|---|---|---|---|---|
| **ZONES** | **1** | **2** | **3** | **4** | **5** | **6** | **7** | **8** |
| TEMPERATURES (°C) | 280 | 280 | 260 | 270 | 255 | 220 | 230 | 270 |

Les vitesses de vis et donc le débit d'extrusion des compositions sont variables suivant les mélanges et l'extrudeuse utilisés. Par exemple, typiquement, dans le cas de la WERNER 40, la vitesse de vis est de 150 tours/minute pour un débit de 50 kg/heure et dans le cas du KO MALAXEUR BUSS la vitesse de vis est de 280 tours/minute dans le malaxeur et de 35 tours/minute dans l'extrudeuse pour un débit de 20 kg/heure.

Un autre objet de la présente invention concerne des articles obtenus à partir d'au moins une composition décrite précédemment. Ces articles peuvent être obtenus par toutes méthodes conventionnelles utilisées dans l'industrie thermoplastique, notamment moulage, formage et filmage.

Dans les exemples, l'évaluation des propriétés et caractéristiques des compositions décrites selon la présente invention, est effectuée après mises en oeuvre sous forme d'haltères ou de barreaux par l'intermédiaire d'extrudeuses classiques d'injection dans les conditions suivantes :

| PRESSE KM B1 ou B2: | | | | | | | | | |
|---|---|---|---|---|---|---|---|---|---|
| **Temp. injection** | **Temp. moule** | **Pression injection** | **Pression maintien** | **Dosage (mm)** | **Vitesse injection** | **Temps Maintien** | **Contre pression** | **Bascul** ^{**.**} **(mm)** | **Vitesse vis** |
| 270°C | 40°C | 150 bars (15 MPa) | 40 bars (4 MPa) | 28 | 40% | 20 s | 30 bars (3 MPa) | 11 | 163 tr/mn |

Les propriétés des compositions de l'invention telles que :
- Allongement à la rupture,
- Résistance à la rupture,
- Module de flexion,
- Fluage,
- Terme au feu,
- Résistance aux solvants NaOH et HCI,
ont été mesurées selon les normes citées plus haut dans la description.

Les propriétés électriques ont été déterminées pour la mesure de la constante diélectrique et le facteur de dissipation selon la norme ASTM D 149, pour la mesure de la rigidité diélectrique selon la norme ASTM D 150 et pour la mesure de la résistivité superficielle et transversale selon la norme ASTM D 257, sur des plaquettes d'épaisseur 2 mm.

Les échantillons sont conditionnés 15 jours à 23° C à 50 % d'humidité relative avant toute mesure.

Les exemples suivants ont pour but d'illustrer l'invention de façon non limitative.

### Exemples

L'ensemble des exemples est décrit dans les tableaux 1 à 7 qui suivent.

La nomenclature utilisée est la suivante :
AR ( % ) = allongement à la rupture exprimé en %.
R ( MPa ) = résistance à la rupture exprimée en MPa
MEF ( MPa ) = Module en flexion exprimé en MPa.
IOL ( % ) = Indice d'oxygène exprimé en %.
Fluage ( % ) = Tenue au fluage exprimée en %.

### Tenue solvant:

D.AR ( % ) = variation d'allongement à la rupture après un séjour de 24 h à 100 °C dans l'huile ASTM N°2 exprimée en %.

D.RR ( % ) = variation de résistance à la rupture après un séjour de 24h à 100 °C dans l'huile ASTM N°2 exprimée en %.

D ARa (%), D.RRa (%), D.ARb (%) et D.RRb (%) représentent respectivement les variations d'allongement à la rupture et les variations de résistance à la rupture après un temps de séjour de 4 heures à 70°C dans (a) l'acide chlorhydrique ( 1N ) et ( b) la soude ( 1N ) exprimées en %.

### Propriétés électriques:

Tgd = facteur de dissipation électrique.
ε = constante diélectrique.
Rs = Résistivité superficielle exprimée en Ohm.
Rt = Résistivité transversale exprimée en Ohm.cm
Rd = Rigidité diélectrique exprimée en kV/mm.

On a observé la présence des ignifugeants dans la matrice et dans la phase dispersée.

Les produits et les polymères décrits dans les tableaux sont les suivants :
PA-6 = ORGAMIDE RMNO CD ( ELF ATOCHEM SA ) : polyamide-6.Point de fusion = 218 °C. Point vicat = 208°C ( charge 1kg )
PA-6 plastifié = ORGAMIDE RMNO P40 CD ( ELF ATOCHEM SA ) : polyamide-6 plastifié. Point vicat = 190°C ( charge 1 kg )
PA-11 = RILSAN BMNO D ( ELF ATOCHEM SA ) : polyamide-11.Densité = 1,03 g/cm3. Point de fusion = 185°C. Point vicat = 180°C ( 1kg ).
PA-11 plastifié = RILSAN BMNO P40 CD ( ELF ATOCHEM SA ) : polyamide-11 plastifié.Densité = 1,05 g/cm3. Point de fusion = 180°C. Point vicat = 170°C ( charge 1 kg )
PA-12 = RILSAN AMNO D ( ELF ATOCHEM SA ) : polyamide-12. densité = 1,01 g/cm3. Point de fusion = 175°C. Point vicat = 172°C ( charge 1 kg )
PA-12 plastifié = RILSAN AMNO P40 CD ( ELF ATOCHEM SA ) : polyamide-12 plastifié. Densité = 1,04 g/cm3. Point de fusion = 171°C. Point vicat = 160 °C ( charge 1 kg )
PEBAX = PEBAX 7033 SA 00 (ELF ATOCHEM SA) : polyétheresteramide. Dureté SHORE D = 70. Densité = 1,01 g/cm3. Point vicat = 165 °C.
   Point de fusion = 172 °C comprenant des blocs PA-12 et des blocs PTMG.
   PB 6333 = PEBAX 6333 SA 00 ( ELF ATOCHEM SA ) : polyétheresteramide. Dureté SHORE D = 63. Densité = 1,01 g/cm3. Point vicat = 161°C. Point de fusion = 169 °C comprenant des blocs PA-12 et des blocs PTMG.
   PB 2533 = PEBAX 2533 SA 00 ( ELF ATOCHEM SA ) : polyétheramide. Dureté SHORE D = 25. Densité = 1,01 g/cm3. Point vicat = 60 °C. Point de fusion = 134 °C comprenant des blocs PA-12 et PTMG.
LOT3700 = LOTADER 3700 ( ELF ATOCHEM ) Terpolymère Ethylène/Acrylate de butyle/Anhydride maléique ( teneur en acrylate = 30 % et en maléique = 2 %) d'indice de fluidité 5 dg/min (2,16kg/190°C)
AX8660 = LOTADER AX 8660 ( ELF ATOCHEM ) Terpolymère Ethylène/Acrylate de butyle/méthacrylate de glycidyle (teneur en acrylate = 28 % et 8 % en époxyde) d'indice de fluidité = 5 dg/min ( 2,16kg/190°C )
   XX1275 = Mélange-maître contenant de la DMS ( ELF ATOCHEM SA )
   DMS = NORAM DMS D ( CECA ): diméthylsulfamine
   Acide TERE = acide téréphtalique
   ARAL.DY0393 = résine époxyde. ( CIBA-CEIGY )
   Indice d'époxy=4,9-5,4 Aeq/Kg de viscosité= 4 MPa s à 25°C.
   TMG = tétraméthylguanidine
   Al.stéarique = Alcool stéarique
   APTS = Acide paratoluènesulfonique
   Antiox 1 = IRGANOX 1098 ( CIBA CEIGY )
   Antiox 2 = HOSTANOX VP PAR 24 ( HOESCHT )
   Mg(OH)₂ = hydroxyde de magnésium MAGNIFIN H10
   (MARTINSWERK )
   Sb₂O₃ = trioxyde d'antimoine ( TIMOMOX 100) (MINES DE LA LUCETTE )
   Adine 102 = Décabromodiphényle (ETHYL CORPORATION)
   Stannate Zn = Stannate de zinc (JOSEPH STOREY COMPANY )
   CYAN.MEL = Cyanurate de mélamine ( CHEMIE LINZ )
   PER = Pentaérythritol ( CELANESE )
   CEEPREE = verre minéral grade C200 ( ICI )

Le TABLEAU 1 représente les propriétés de différentes compositions variant par la nature du polyamide de base utilisé.

Le TABLEAU 2 représente les propriétés de différentes compositions à base de polyamide-6 variant par les proportions relatives des polymères réticulants.

Le TABLEAU 3 représente les propriétés de différentes compositions à base de polyamide-6 variant de par la teneur en charges ignifuges Mg(OH)₂ et Sb₂O₃.

Le TABLEAU 4 représente les propriétés de différentes compositions à base de polyamide-6 variant de par la nature des charges ignifugeantes employées.

Le TABLEAU 5 représente les propriétés de différentes compositions à base de polyamide-6 variant de par la nature des réactifs de réticulation.

Le TABLEAU 6 représente les propriétés électriques de différentes compositions à base de polyamide-6 et de polyamide-6 plastifié.

Le TABLEAU 7 représente la tenue à l'acide chlorhydrique, à la soude et à l'huile ASTM n°2 de différentes compositions à base de polyamide-6, de polyétheresteramide et de différents ratios de polymères réticulants.

Les résultats montrent, sans équivoque, qu'il est possible d'obtenir, par ces formulations, un matériau souple, à tenue au feu améliorée, présentant une bonne résistance aux solvants et une bonne tenue dimensionnelle à chaud.

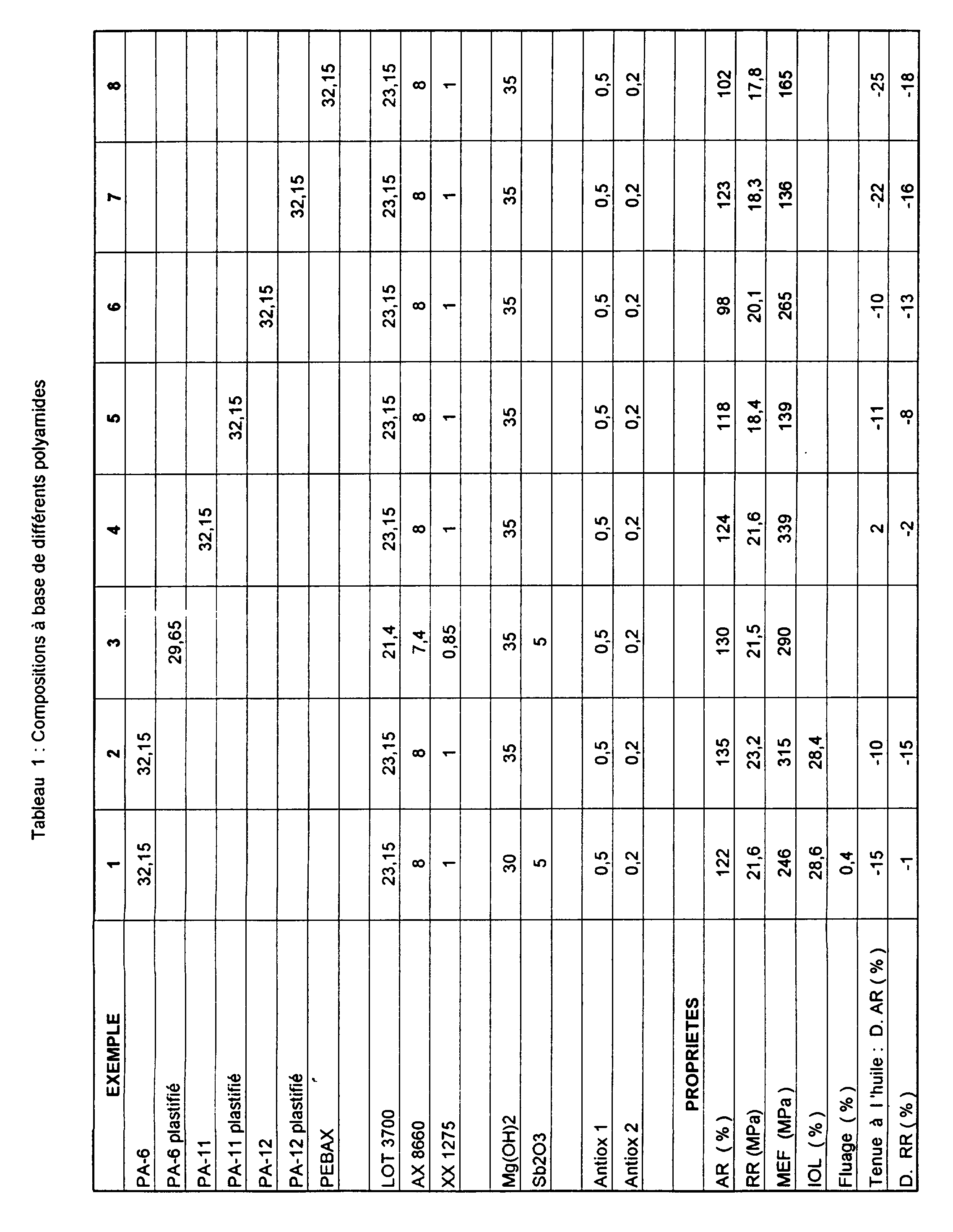

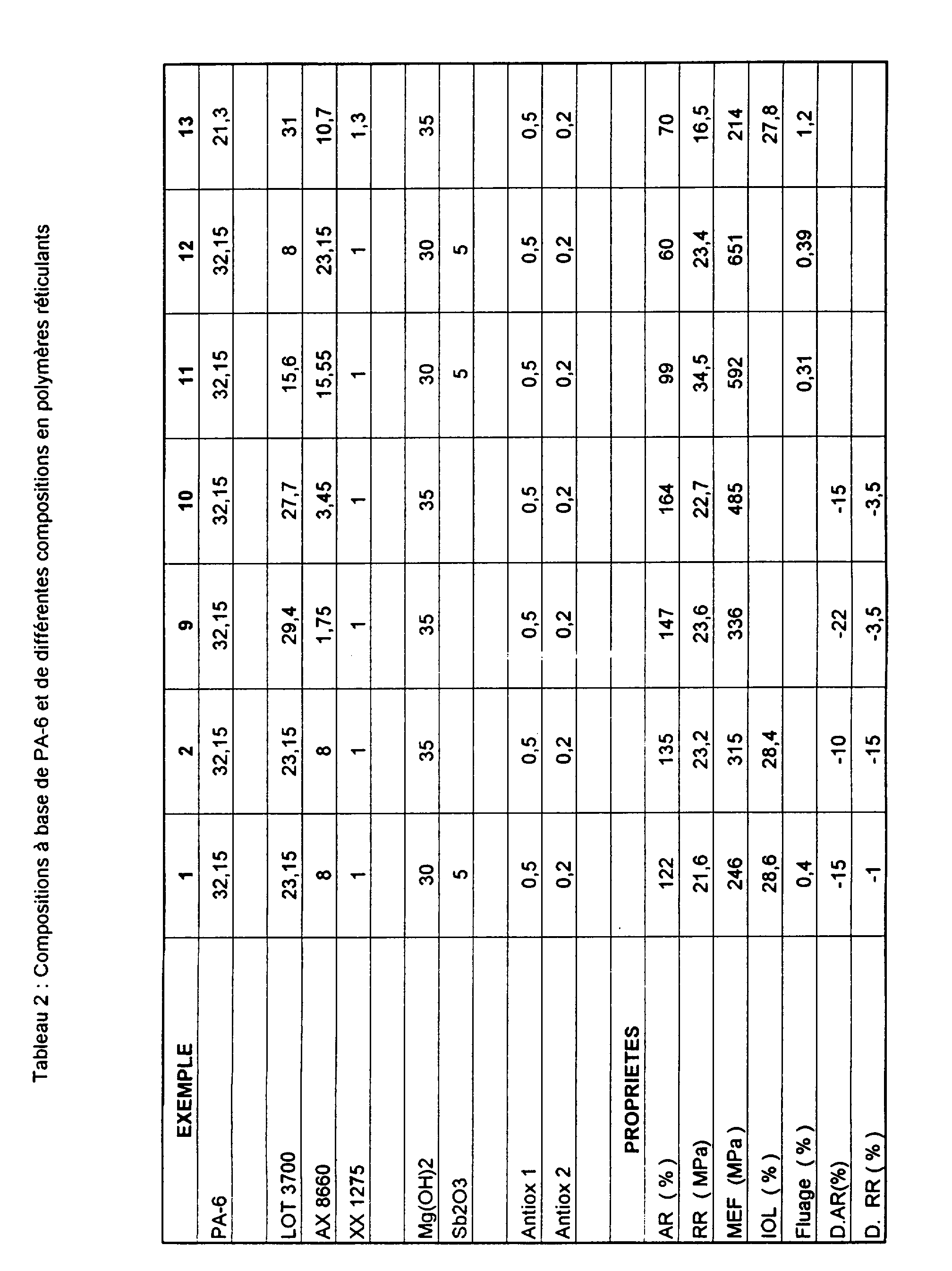

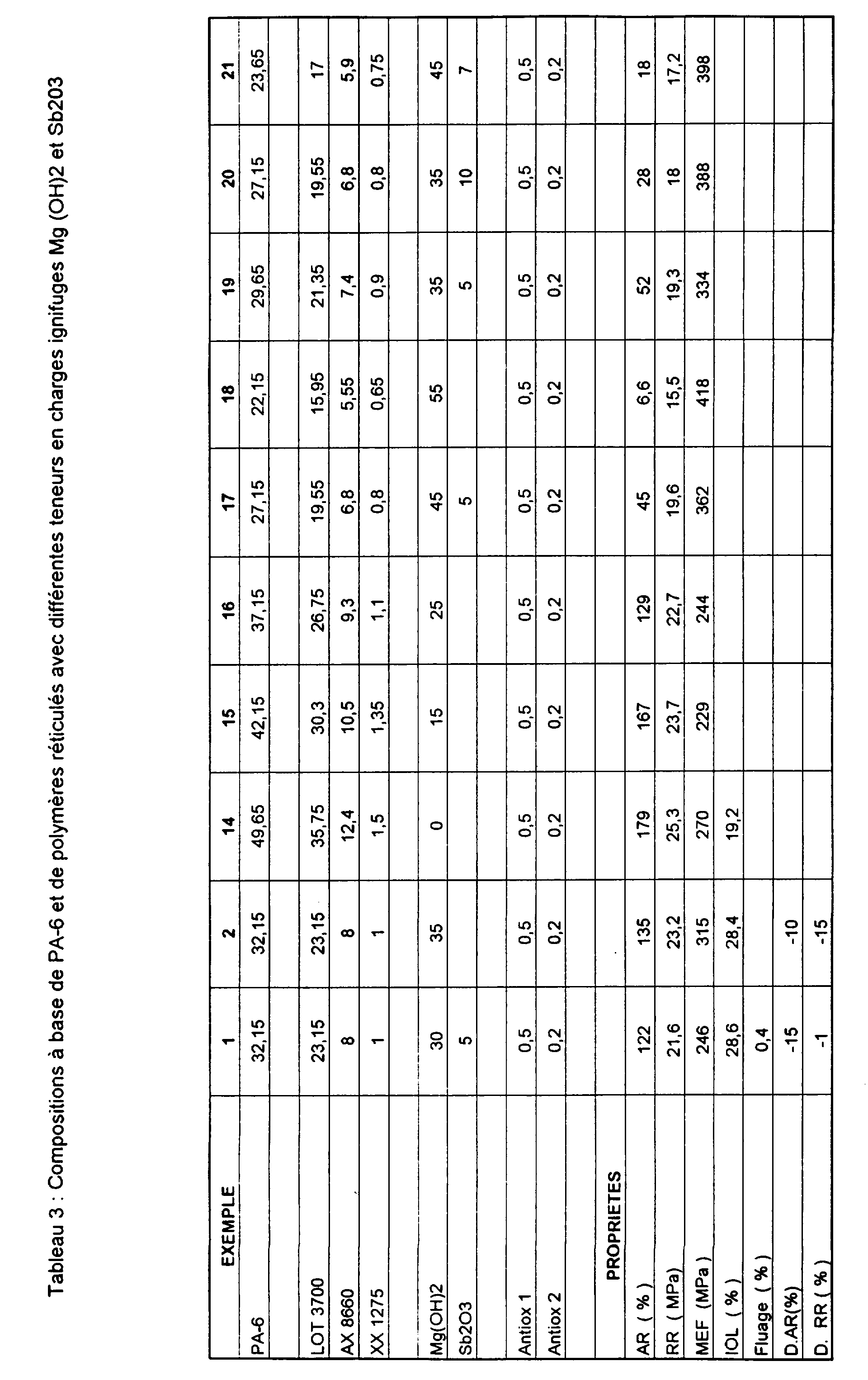

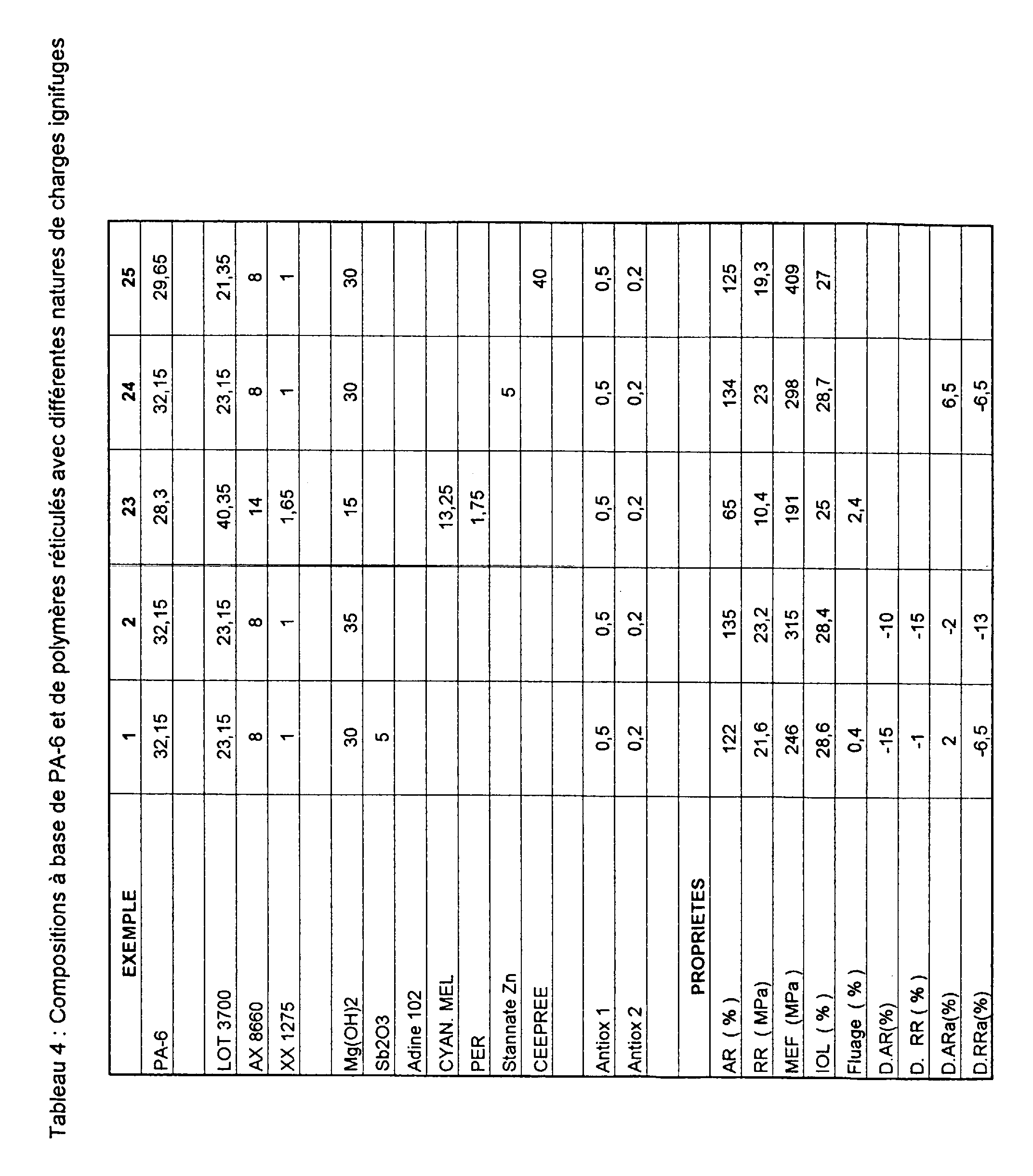

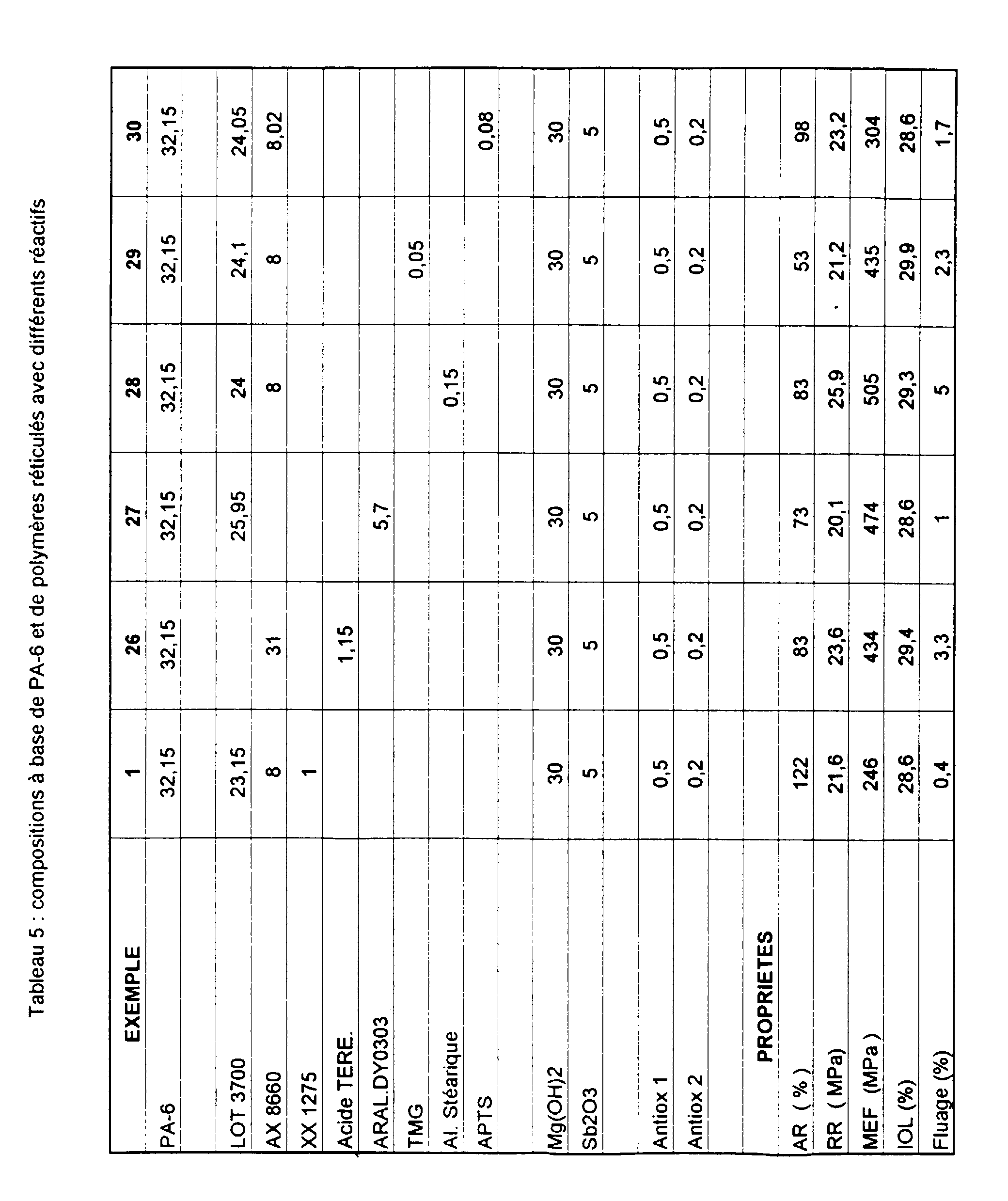

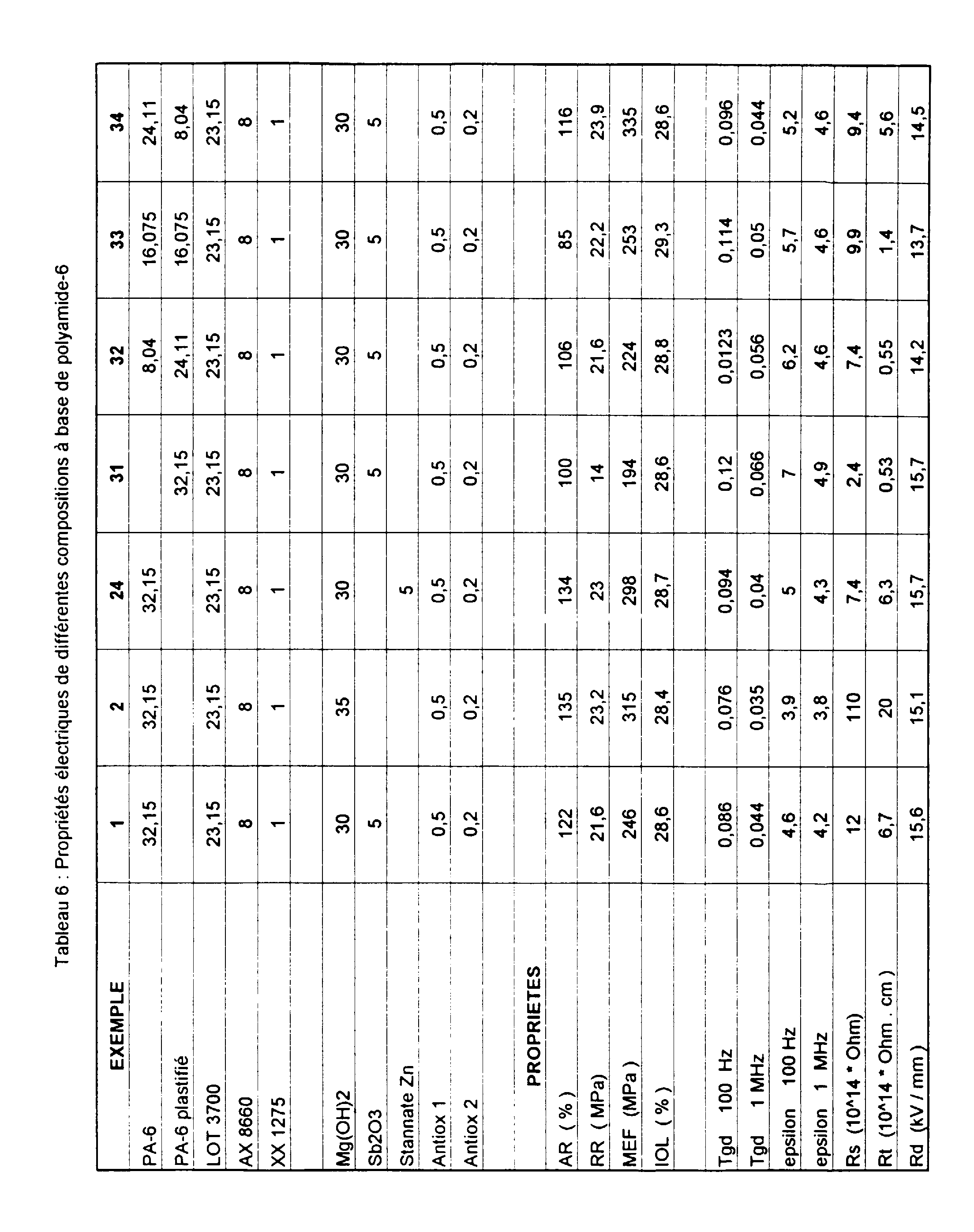

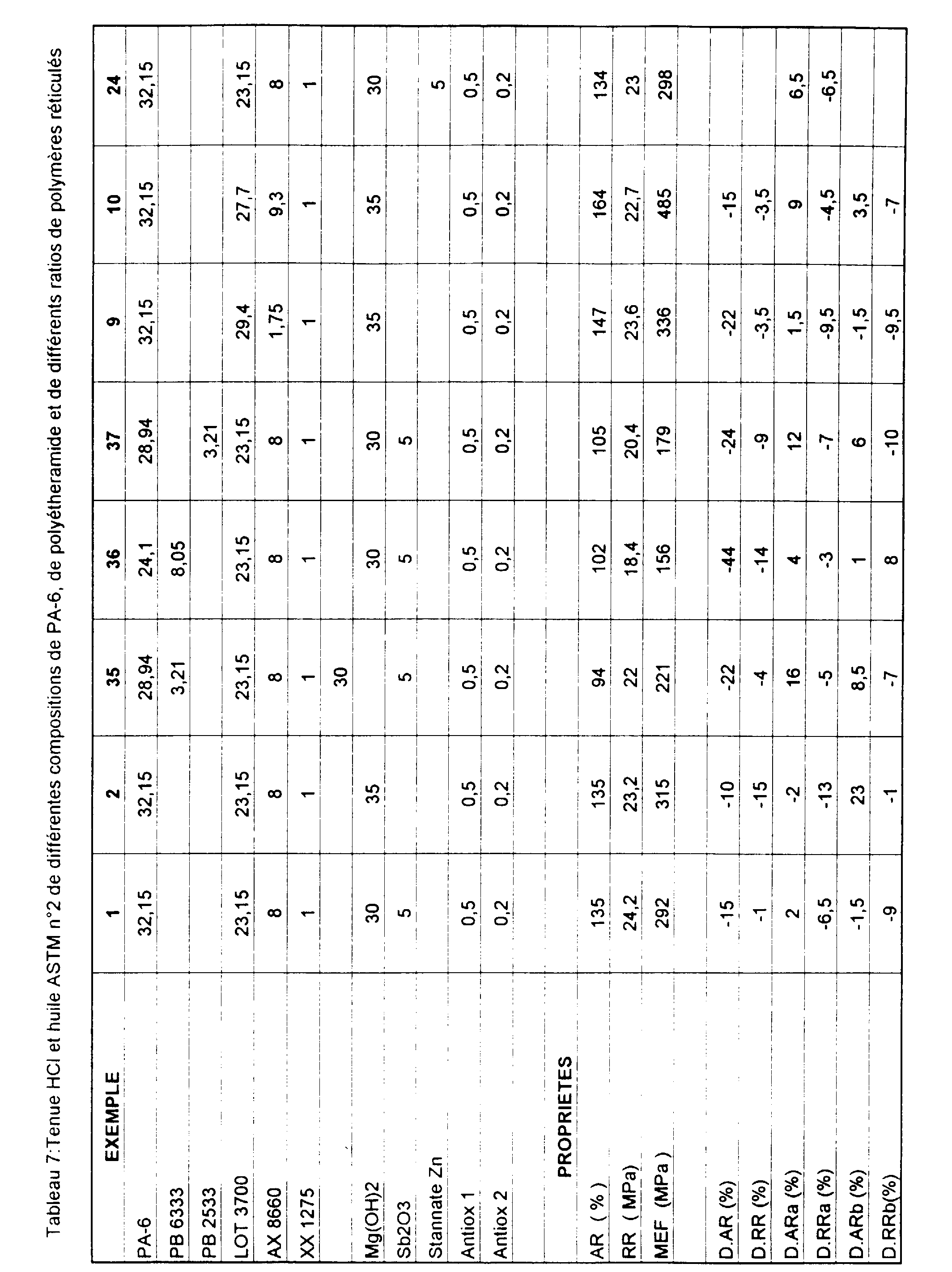

## Revendications

1. Câbles électriques ayant un revêtement comprenant au moins une couche d'une composition thermoplastique comprenant :
- une matrice (A) en polyamide
- une phase dispersée (B) à base de polyoléfine au moins partiellement reticulée provenant de la réaction chimique d'une molécule ou d'un polymère éthylénique (B1) porteur d'une ou de plusieurs fonctions dérivant d'acides pouvant être mono ou dicarboxyliques ou de polyamines et d'une molécule ou d'un polymère éthylénique (B2) porteur d'une ou de plusieurs fonctions de type époxydique
- des agents ignifugeants (C) répartis entre ces deux phases
- le rapport de la teneur du polyamide (A) à celle de la phase dispersée (B) est compris entre 0,25 et 3 en poids,
le module de flexion de la composition étant inférieur à 1000 MPa (iso 178).

2. Câbles électriques selon la revendication 1 caractérisés en ce que la phase dispersée (B) est le résultat de la réaction chimique d'un polymère éthylénique (B1) porteur d'une ou de plusieurs fonctions dérivant d'acides carboxyliques et d'un polymère éthylénique (B2) porteur d'une ou de plusieurs fonctions de type époxydique éventuellement en présence d'un activateur comportant de l'azote ou une fonction amine tertiaire.

3. Câbles électriques selon la revendication 1 ou 2 caractérisés en ce que le module de flexion est avantageusement entre 100 et 500 MPa.

4. Câbles électriques selon la revendication 1 ou 2 caractérisés en ce que le module de flexion est compris entre 136 et 650.

5. Procédé de préparation des câbles selon l'une des revendications précédentes caractérisé en ce qu'on introduit dans une extrudeuse le polyamide, les composants de la phase (B) ayant été auparavant prémélangés et au moins une partie des agents ignifugeants (C), le reste de (C) étant introduit dans une zone ultérieure de l'extrudeuse.

## Patentansprüche

1. Elektrische Kabel, die eine Hülle aufweisen, die mindestens eine Schicht aus einer thermoplastischen Zusammensetzung umfaßt, die enthält:
- eine Matrix (A) aus Polyamid,
- eine dispergierte Phase (B) auf Polyolefinbasis, die mindestens teilweise vernetzt ist, die von der chemischen Umsetzung eines ethylenischen Moleküls oder ethylenischen Polymers (B1), das eine oder mehrere funktionelle Gruppen trägt, die von Säuren, bei denen es sich um Mono- oder Dicarbonsäuren handeln kann, oder von Polyaminen abstammen, mit einem ethylenischen Molekül oder ethylenischen Polymer (B2), das eine oder mehrere funktionelle Gruppen vom Epoxid-Typ trägt, stammt,
- Flammschutzmittel (C), die in diesen beiden Phasen verteilt sind,
wobei das Verhältnis des Gehalts an Polyamid (A) zum Gehalt an dispergierter Phase (B), bezogen auf das Gewicht, 0,25 bis 3 beträgt und wobei der Biegemodul der Zusammensetzung kleiner als 1000 MPa (ISO 178) ist.

2. Elektrische Kabel nach Anspruch 1, dadurch gekennzeichnet, daß die dispergierte Phase (B) das Ergebnis der chemischen Umsetzung eines ethylenischen Polymers (B1), das eine oder mehrere funktionelle Gruppen trägt, die von Carbonsäuren abstammen, mit einem ethylenischen Polymers (B2) ist, das eine oder mehrere funktionelle Gruppen vom Epoxid-Typ trägt, wobei die Umsetzung gegebenenfalls in Gegenwart eines Aktivators, der Stickstoff oder eine tertiäre Amingruppe enthält, erfolgt.

3. Elektrische Kabel nach Anspruch 1 oder 2, dadurch gekennzeichnet, daß der Biegemodul vorteilhaft im Bereich von 100 bis 500 MPa liegt.

4. Elektrische Kabel nach Anspruch 1 oder 2, dadurch gekennzeichnet, daß der Biegemodul im Bereich von 136 bis 650 MPa liegt.

5. Verfahren zur Herstellung der Kabel nach einem der vorhergehenden Ansprüche, dadurch gekennzeichnet, daß das Polyamid, die Bestandteile der Phase (B), die zuvor miteinander zu einem Vorgemisch vermischt wurden, und mindestens ein Teil der Flammschutzmittel (C) in einen Extruder gegeben werden, wobei das restliche Flammschutzmittel (C) in einen sich später anschließenden Bereich des Extruders gegeben wird.

## Claims

1. Electrical cables having a jacket comprising at least one layer of a thermoplastic composition comprising:
- a polyamide matrix (A);
- an at least partially crosslinked polyolefin-based dispersed phase (B) coming from the chemical reaction of an ethylene molecule or polymer (B1) carrying one or more functional groups deriving from acids, which may be monocarboxylic or dicarboxylic, or from polyamines with an ethylene molecule or polymer (B2) carrying one or more epoxy-type functional groups;
- fire retardants (C) distributed between these two phases,
- the ratio of the polyamide (A) content to that of the dispersed phase (B) is between 0.25 and 3 by weight,
the flexural modulus of the composition being less than 1000 MPa (ISO 178).

2. Electrical cables according to Claim 1, characterized in that the dispersed phase (B) is the result of the chemical reaction of an ethylene polymer (B1) carrying one or more functional groups deriving from carboxylic acids with an ethylene polymer (B2) carrying one or more epoxy-type functional groups optionally in the presence of a nitrogen-containing activator or a tertiary amine functional group.

3. Electrical cables according to Claim 1 or 2, characterized in that the flexural modulus is advantageously between 100 and 500 MPa.

4. Electrical cables according to Claim 1 or 2, characterized in that the flexural modulus is between 136 and 650 MPa.

5. Process for producing the cables according to one of the preceding claims, characterized in that the polyamide, the components of the phase (B) which have been premixed beforehand and at least part of the fire retardants (C) are introduced into an extruder, the rest of (C) being introduced into a downstream zone of the extruder.
